# EUROPÄISCHE PATENTSCHRIFT

(11) **EP 0 410 302 B1**
(45) Veröffentlichungstag und Bekanntmachung des Hinweises auf die Patenterteilung: **24.02.1993**
(21) Anmeldenummer: 90113835.4
(22) Anmeldetag: 19.07.1990
(51) Int. Cl.: C08L 25/06, C08F 283/00, C08J 9/20

(54) **Expandierbare Formmassen mit hoher Wärmebeständigkeit und Verfahren zu ihrer Herstellung**
Expandable moulding compounds with higher heat resistance and process for their preparation
Masses à mouler expansibles à haute résistance à la chaleur et leur procédé de préparation

(30) Priorität: 27.07.1989 DE 3924868
(43) Veröffentlichungstag der Anmeldung: 30.01.1991
(73) Patentinhaber: BASF Aktiengesellschaft, 67063 Ludwigshafen (DE)
(72) Erfinder: Hahn, Klaus, Dr., D-6719 Kirchheim (DE); Guhr, Uwe, Dr., D-6718 Gruenstadt (DE); Hintz, Hans, Dr., D-6700 Ludwigshafen (DE); Wittenberg, Dietmar, Dr., D-6800 Mannheim 1 (DE)

(56) Entgegenhaltungen:
- EP-A- 0 294 783
- EP-A- 0 315 478
- EP-A- 0 357 934
- FR-A- 1 368 544

## Beschreibung

Die Erfindung betrifft Schaumstoffe auf Basis eines Gemisches aus Styrolpolymerisaten und Polyphenylensulfid. Diese zeichnen sich durch hohe Wärmeformbeständigkeit aus.

Der Erfindung lag die Aufgabe zugrunde, expandierbare Formmassen bereitzustellen, die für die Herstellung von wärmebeständigen Schaumstoff-Formteilen geeignet sind. Ferner war es Aufgabe der Erfindung, die Ölbeständigkeit derartiger Schaumstoffe zu verbessern. Überraschenderweise wurde nun gefunden, daß die genannten Aufgaben gelöst werden durch expandierbare Formmassen auf Basis von Styrolpolymerisaten und Polyphenylensulfid.

Gegenstand der Erfindung sind somit expandierbare Formmassen mit hoher Wärmeformbeständigkeit, enthaltend
a) 80 bis 99 Gew.-% mindestens eines Styrolpolymerisats
b) 1 bis 20 Gew.-% Poly-1,4-phenylensulfid
c) 1 bis 10 Gew.-% bezogen auf die Summe von a) und b) eines C₃- bis C₆-Kohlenwassertstoffs als Treibmittel, und gegebenenfalls
d) übliche Zusatzstoffe in wirksamen Mengen.

Gegenstand der Erfindung ist ferner ein Verfahren zur Herstellung dieser expandierbaren Formmassen, das dadurch gekennzeichnet ist, daß man eine Lösung von Poly-1,4-phenylensulfid in Styrol in wäßriger Suspension polymerisiert und während oder nach der Polymerisation das Treibmittel zufügt.

Die neuen expandierbaren Formmassen weisen im allgemeinen Perlform auf. Die Form ist bedingt durch die Herstellung mittels Suspensionspolymerisation. Die Partikel liegen in annähernd kugelförmiger Gestalt vor. Die Perlen haben einen mittleren Durchmesser zwischen etwa 0,1 und 6 mm, vorzugsweise zwischen 0,2 und 4 mm, insbesondere zwischen 0,3 und 3 mm.

Geeignete Styrolpolymerisate a) sind Polystyrol und Copolymere, die mindestens 50 Gew.-% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1-8 C-Atomen. N-Vinylverbindungen, wie N-Vinylcarbazol, Maleinsäureanhydrid. Vorteilhaft enthält das Styrolpolymerisat eine geringe Menge eines Vernetzers einpolymerisiert, d.h. einer Verbindung mit mehr als einer, vorzugsweise zwei, polymerisierbaren Doppelbindungen, wie Divinylbenzol, Butadien oder Butandioldiacrylat. Der Vernetzer wird im allgemeinen in einer Menge von 0,005 bis 0,05 Mol-%, bezogen auf Styrol, verwendet. Styrolpolymerisate, die mindestens 5 Gew.-%, im allgemeinen 5-17 Gew.-%, vorzugsweise 5-10 Gew.-% Acrylnitril einpolymerisiert enthalten, führen zu Formmassen, die sich durch eine hohe Ölbständigkeit auszeichnen. Vorteilhaft setzt man dazu als Styrolpolymerisat ein Gemisch aus Polystyrol und einem styrollöslichen Styrol-Acrylnitril-Copolymeren ein, insbesondere ein Gemisch aus 50-83 Gew.-%, vorzugsweise 60-80 Gew.-% Polystyrol und 17-50 Gew.-%, insbesondere 20-40 Gew.-% eines Styrol-Acrylnitril-Copolymeren mit einem Gehalt an einpolymerisiertem Acrylnitril von etwa 15-35 Gew.-%, insbesondere 20-30 Gew.-%.

Das Styrolpolymerisat a) wird verwendet in Mengen von 80-99 Gew.-%, vorzugsweise 85-98 Gew.-%, insbesondere 90-97 Gew.-%, bezogen auf die Summe von a) und b).

Die expandierbaren Formmassen enthalten als weiteren Bestandteil b) 1 bis 20 Gew.-%, vorzugsweise 2 bis 15 Gew.-%, insbesondere 3 bis 10 Gew.-% Poly-1,4-phenylensulfid.

Als Treibmittel enthalten die Formmassen 1 bis 10 Gew.-%, vorzugsweise 3 bis 8 Gew.-%, insbesondere 5 bis 7 Gew.-% eines C₃- bis C₆-Kohlenwasserstoffs, wie Propan, Butan, Isobutan, n-Pentan, i-Pentan, Neopentan und/oder Hexan. Vorzugsweise wird ein handelsübliches Pentan-Gemisch verwendet.

Als weitere Zusatzstoffe können die expandierbaren Formmassen übliche Farbstoffe, Füllstoffe, Stabilisatoren, Flammschutzmittel, Synergisten, Keimbildner und Gleitmittel in üblichen wirksamen Mengen enthalten.

Die Herstellung der perlförmigen expandierbaren Formmassen erfolgt durch Suspensionspolymerisation. Dazu wird Polyphenylensulfid oder ein Gemisch aus Polyphenylensulfid und Polystyrol, wie es als Handelsprodukt zugänglich ist, und gegebenenfalls das Styrol-Acrylnitril-Copolymere in Styrol gelöst, gegebenenfalls weitere Copolymere und gegebenenfalls der Vernetzer zugefügt und diese Lösung in wäßriger Suspension, zweckmäßig unter Zusatz eines üblichen Suspendierhilfsmittels, polymerisiert. Das Treibmittel wird dabei bereits bei der Polymerisation mit vorgelegt oder im Laufe der Polymerisation zugefügt. Es kann aber auch erst nach beendeter Polymerisation dem Ansatz zugefügt werden. Die erhaltenen perlförmigen expandierbaren Polymerisate werden danach von der wäßrigen Phase abgetrennt, gewaschen und getrocknet.

Die expandierbaren Formmassen können in bekannter Weise in üblichen Vorschäumern mit Heißluft oder Dampf zu perlförmigen Schaumstoffpartikeln aufgeschäumt werden. Die Schaumstoffperlen können in an sich bekannter Weise durch Erhitzen in nicht gasdicht schließenden Formen zu Formkörpern verschweißt werden.

Die in den Beispielen genannten Teile sind Gewichtsteile

### Beispiel 1

In einem druckfesten Rührkessel wurde eine Mischung aus 200 Teilen Wasser, 0,1 Teilen Natriumpyrophosphat, 0,15 Teilen tert.Butylperbenzoat, 0,45 Teilen Benzoylperoxid, 100 Teilen einer Lösung von 4 Teilen Poly-1,4-phenylensulfid und 0,01 Teilen Divinylbenzol in 96 Teilen Styrol, 7 Teilen Pentan und 3 Teilen einer 10%igen wäßrigen Lösung von Polyvinylpyrrolidon unter Rühren auf 90°C erhitzt, 5 Stunden bei 90°C gehalten und anschließend 2 Stunden bei 100°C und weitere 2 Stunden auf 120°C erhitzt. Nach dem Abkühlen wurde das erhaltene Perlpolymerisat mit einem mittleren Perlendurchmesser von 0,8 mm von der wäßrigen Phase abgetrennt, gewaschen und getrocknet. Das so erhaltene Produkt wurde in einem handelsüblichen kontinuierlichen Rührvorschäumer, Typ Rauscher, mit strömendem Wasserdampf zu Schaumstoffperlen (Schüttgewicht 20 g/l) aufgeschäumt. Nach 24 Stunden Zwischenlagerung wurden die Schaumstoffperlen in eine Blockform, Typ Rauscher, eingefüllt und durch Bedampfen mit Wasserdampf von 1,8 bar während 20 Sekunden zu einem Block verschweißt. Der Schaumstoff zeigte sich im Inneren als völlig frei von Lunkern und Fehlstellen. Die Wärmeformbeständigkeit nach DIN 53 424 betrug 110°C.

### Beispiel 2

Es wurde wie in Beispiel 1, jedoch ohne Mitverwendung von Divinylbenzol gearbeitet. Der erhaltene Schaumstoff war im Inneren völlig frei von Lunkern und Fehlstellen. Die Wärmeformbeständigkeit nach DIN 53 424 betrug 107°C.

### Beispiel 3

Es wurde wie in Beispiel 1 gearbeitet, jedoch 100 Teile einer Lösung von 6 Teilen Poly-1,4-phenylensulfid und 0,01 Teilen Divinylbenzol in 94 Teilen Styrol verwendet. Der erhaltene Schaumstoff war völlig frei von Lunkern und Fehlstellen. Die Wärmeformbeständigkeit betrug 114°C.

### Beispiel 4

Es wurde wie in Beispiel 3, jedoch ohne Mitverwendung von Divinylbenzol gearbeitet. Der Schaumstoff war völlig frei von Lunkern und Fehlstellen. Die Wärmeformbeständigkeit betrug 112°C.

### Beispiel 5 (Vergleich)

Es wurde wie in Beispiel 1, jedoch ohne Mitverwendung von Poly-1,4-phenylensulfid gearbeitet. Der Schaumstoff zeigte eine Wärmeformbeständigkeit von 102°C.

### Beispiel 6

Es wurde wie in Beispiel 1 gearbeitet, jedoch 100 Teile einer Lösung von 6 Teilen eines Blends aus Poly-1,4-phenylensulfid und Polystyrol (Gewichtsverhältnis 80 : 20) und 25 Teilen eines Styrol-Acrylnitril-Copolymeren (70/30 Gew.%) und 0,01 Teilen Divinylbenzol in 69 Teilen Styrol verwendet.

Die Wärmeformbeständigkeit des Schaumstoffs beträgt 112°C. Zur Prüfung der Ölbeständigkeit wurden in Anlehnung an DIN 53428 Proben des Schaumstoffs (5 x 5 x 5 cm) in Heizöl und in Dieselöl gelagert. Nach 72-stündiger Lagerung war der Schaumstoff unverändert.

### Beispiel 7

Es wurde wie in Beispiel 6, jedoch ohne Mitverwendung von Divinylbenzol gearbeitet.

Die Wärmeformbeständigkeit des Schaumstoffs beträgt 110°C. Der Schaumstoff ist beständig gegenüber Heizöl und Dieselöl.

## Patentansprüche

1. Expandierbare Formmassen mit hoher Wärmeformbeständigkeit, enthaltend
a) 80 bis 99 Gew.-% mindestens eines Styrolpolymerisats
b) 1 bis 20 Gew.-% Poly-1,4-phenylensulfid
c) 1 bis 10 Gew.-%, bezogen auf die Summe von a) und b) eines C₃- bis C₆-Kohlenwasserstoffs als Treibmittel, und gegebenenfalls
d) übliche Zusatzstoffe in wirksamen Mengen.

2. Expandierbare Formmassen gemäß Anspruch 1, enthaltend als Komponente a) ein unter Mitverwendung von 0,005 bis 0,05 Mol-% eines Vernetzers hergestelltes Polystyrol.

3. Expandierbare Formmassen gemäß Anspruch 1 bis 2, dadurch gekennzeichnet, daß als Komponente a) ein Gemisch verwendet wird aus
a1) 50 bis 83 Gew.-% Polystyrol und
a2) 17 bis 50 Gew.-% eines styrollöslichen Styrol-Acrylnitril-Copolymeren, wobei der Gehalt an Acrylnitril, bezogen auf die Summe von a1) und a2) mindestens 5 Gew.-% beträgt.

4. Verfahren zur Herstellung expandierbarer Formmassen gemäß Anspruch 1 bis 2, dadurch gekennzeichnet, daß man eine Lösung von Poly-1,4-phenylensulfid in Styrol in wäßriger Suspension polymerisiert und während oder nach der Polymerisation das Treibmittel zugibt.

5. Verfahren zur Herstellung expandierbarer Formmassen gemäß Anspruch 3, dadurch gekennzeichnet, daß man eine Lösung von Poly-1,4-phenylensulfid und Styrol-Acrylnitril-Copolymeren in Styrol in wäßriger Suspension in Gegenwart des Treibmittels polymerisiert und während oder nach der Polymerisation das Treibmittel zufügt.

## Claims

1. An expandable molding composition having high heat distortion resistance and containing
a) from 80 to 99 % by weight of one or more styrene polymers,
b) from 1 to 20 % by weight of poly-1,4-phenylene sulfide,
c) from 1 to 10 % by weight, based on the sum of a) and b), of a C₃- to C₆-hydrocarbon as blowing agent, and, if desired,
d) customary additives in effective amounts.

2. An expandable molding composition as claimed in claim 1, containing, as component a), a polystyrene prepared using from 0.005 to 0.05 mol-% of a crosslinking agent.

3. An expandable molding composition as claimed in claim 1 or 2, wherein component a) is a mixture of
a1) from 50 to 83 % by weight of polystyrene and
a2) from 17 to 50 % by weight of a styrene-soluble styrene-acrylonitrile copolymer, the acrylonitrile content being 5 % by weight or more, based on the sum of a1) and a2).

4. A process for the preparation of an expandable molding composition as claimed in claim 1 or 2, which comprises polymerizing a solution of poly-1,4-phenylene sulfide in styrene in aqueous suspension, and adding the blowing agent during or after the polymerization.

5. A process for the preparation of an expandable molding composition as claimed in claim 3, which comprises polymerizing a solution of poly-1,4-phenylene sulfide and styrene-acrylonitrile copolymers in styrene in aqueous suspension in the presence of the blowing agent, and adding the blowing agent during or after the polymerization.

## Revendications

1. Matières à mouler expansibles à stabilité dimensionnelle à chaud élevée, contenant
a) 80 à 99 % en poids d'au moins un polymérisat de styrène
b) 1 à 20 % en poids de polysulfure de phénylène - 1,4
c) 1 à 10 % en poids, rapportés à la somme de a) et b), d'un hydrocarbure en C3 à C6 comme gonflant, et éventuellement
d) des additifs usuels en quantités efficaces.

2. Matières à mouler expansibles selon la revendication 1, contenant, comme composant a) un polystyrène préparé avec utilisation simultanée de 0,005 à 0,05 mol % d'un réticulant.

3. Matières à mouler expansibles selon la revendication 1 ou 2, caractérisées par le fait qu'est utilisé, comme composant a) un mélange de
a1) 50 à 83 % en poids de polystyrène et
a2) 17 à 50 % en poids d'un copolymère styrène-acrylonitrile soluble dans le styrène, la teneur en acrylonitrile, rapportée à la somme de a1) et a2), étant d'au moins 5 % en poids.

4. Procédé de préparation de matières à mouler expansible selon la revendication 1 ou 2, caractérisées par le fait que l'on polymérise en suspension aqueuse une solution de polysulfure de phénylène - 1,4 dans du styrène et qu'on ajoute le gonflant pendant ou après la polymérisation.

5. Procédé de préparation de matières à mouler expansible selon la revendication 3, caractérisée par le fait que l'on polymérise en suspension aqueuse, en présence du gonflant, une solution de polysulfure le phénylène - 1,4 et de copolymère styrène-acrylonitrile, dans du styrène et qu'on ajoute le gonflant pendant ou après la polymérisation.
